# EUROPEAN PATENT APPLICATION

(11) **EP 4 539 165 A1**
(43) Date of publication of application: **16.04.2025**
(21) Application number: 23819421.1
(22) Date of filing: 23.01.2023
(51) Int. Cl.: H01M 4/58, C01B 25/45, C01B 32/05, C01B 32/158, C01B 32/164, H01M 4/36

(54) **FUNCTIONAL BASE MATERIAL MANUFACTURING METHOD, FUNCTIONAL BASE MATERIAL, SECONDARY BATTERY, CATHODE MATERIAL, AND FUNCTIONAL BASE MATERIAL MANUFACTURING DEVICE**

(30) Priority: 10.06.2022 JP 2022094428
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); FURUKI, Kenichi, Tokyo 141-0032 (JP)
(74) Representative: Simmons & Simmons LLP (Munich)
(86) International application number: PCT/JP2023/001847
(87) International publication number: WO 2023/238433

(57) **Abstract**

Provided is a functional base material manufacturing method, etc. The functional base material manufacturing method includes: a reduction step (S21) in which a base material consisting primarily of a compound containing at least phosphorus and a transition metal is caused to contact a reduction gas; and a carbonization step (S22) in which the base material that has been in contact with the reduction gas is caused to contact a carbonization gas.

## Description

### Technical Field

The present invention relates to a functional base material manufacturing method, a functional base material, a secondary battery, a cathode material, and a functional base material manufacturing apparatus.

### Background Art

There are reactors for manufacturing a desired product by applying a predetermined atmosphere to a treated material in a powdered or granular form. For example, generally, a reactor called a rotary kiln manufactures a desired product by heating a hollow reaction container that rotates around a central axis and passing materials through the reaction container while rolling the materials. In addition, for example, a reactor called a roller hearth kiln manufactures a desired product by passing a treated material or a workpiece through a tunnel-shaped reaction container. Various other reactors have also been developed.

For example, Patent Literature 1 discloses a reactor described below. The reactor includes a screw feeder main body to become a pressure reaction container, a catalyst supplying unit that introduces a catalyst into the screw feeder main body, and a low hydrocarbon supplying unit that introduces a low hydrocarbon into the screw feeder main body. In addition, the reactor includes a screw that conveys generated nanocarbon, a solid sending unit that sends out the catalyst and the nanocarbon conveyed by the screw, and a gas sending unit that sends generated hydrogen to outside of the feeder main body.

In consideration thereof, the present inventors examined a method of manufacturing a functional base material. The functional base material is a base material that consists mainly of a compound (for example, lithium iron phosphate) containing at least phosphorus and a transition metal and includes a nanocarbon (for example, one or a plurality of carbon nanotubes) grown from a surface of the base material.

### Citation List

### Patent Literature

Patent Literature 1: Japanese Unexamined Patent Application Publication No. 2006-290682

### Summary of Invention

### Technical Problem

However, in the reactor described in Patent Literature 1, there is no mention of any method of manufacturing a functional base material, etc.

Other problems to be solved and novel features will become apparent from descriptions in the present specification and accompanying drawings.

### Solution to Problem

A functional base material manufacturing method according to an embodiment includes the steps of: bringing a reduction gas into contact with a base material that consists mainly of a compound containing at least phosphorus and a transition metal; and bringing a carbonization gas into contact with the base material having been in contact with the reduction gas.

### Advantageous Effects of Invention

According to the present disclosure, a functional base material manufacturing method, a functional base material, a secondary battery, a cathode material, and a functional base material manufacturing apparatus can be provided.

### Brief Description of Drawings

Fig. 1 is a side view of a reactor according to a first embodiment;
Fig. 2 is a block diagram of the reactor according to the first embodiment;
Fig. 3 is a flow chart of treatment executed by the reactor;
Fig. 4 is a side view of a reactor according to a second embodiment;
Fig. 5 is a side view of a reactor according to a third embodiment; and
Fig. 6 is a diagram representing a manufacturing process of a lithium ion battery (an example of the secondary battery according to the present disclosure).

### Description of Embodiments

Hereinafter, while the present invention will be described through embodiments of the invention, the invention as set forth in the claims is not limited to the following embodiments. Furthermore, not all components described in the embodiments are essential as solutions to the problem. In the following description and in the drawings, omissions and abridgments have been made when appropriate to do so for the sake of clarity. In the respective drawings, same elements are denoted by same reference signs and repetitive descriptions are omitted as needed.

### <First embodiment (reference example)>

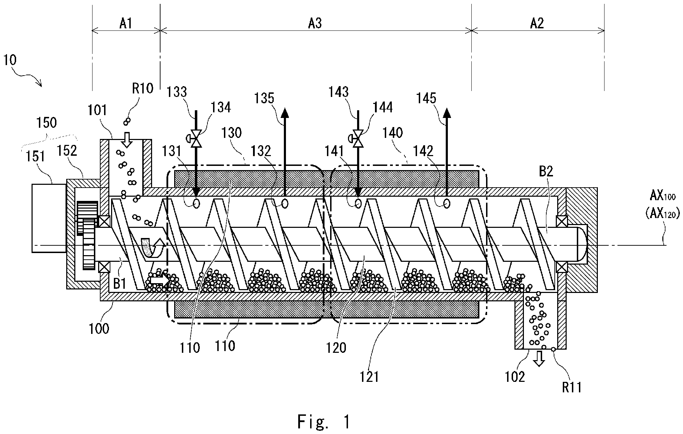

A main configuration of a reactor according to a first embodiment (reference example) will be described with reference to Fig. 1. Fig. 1 is a side view of a reactor 10 according to the first embodiment. The reactor 10 shown in the drawing has been partially cut out in order to facilitate understanding.

The reactor 10 is an apparatus for manufacturing a product by, for example, subjecting a treated material in a powdered or granular form to predetermined physical stimuli and other conditions. The reactor 10 includes a cylindrical reaction container 100, a treated material supplying unit (supply port 101) that supplies a treated material R10 to the reaction container 100, a conveying apparatus (screw 120) that conveys the treated material R10 supplied to the reaction container 100 from a side of the supplying unit of the reaction container 100 to a side of a sending unit of the reaction container 100, a fluid supplying unit (first fluid inlet 131, first fluid outlet 132, first valve 134, and the like) that supplies a fluid to come into contact with the conveyed treated material into the reaction container 100, and a temperature control unit (temperature control area 110 and the like) that controls a temperature of the reaction container 100 for each mutually different area in a direction of an axis AX₁₀₀ of the reaction container 100. While the physical stimuli are not particularly limited as long as the physical stimuli are means used in a process of changing a treated material into a product, an example of the physical stimuli is a temperature change such as heating or cooling. Another example of the physical stimuli is a stress transfer such as agitating, mixing, kneading, or grinding. Another example of the physical stimuli is a reaction involving a transfer of electrons and radicals. Another example of the physical stimuli is a contact with a catalyst.

In the reaction container 100, due to the treated material R10 supplied to the side of the supply port 101 of the reaction container 100 being heated while being conveyed to the side of a sending port 102 of the reaction container 100 and a predetermined fluid to come into contact with the conveyed treated material R10 being supplied into the reaction container 100, the treated material R10 (treated material) is to be continuously treated at a predetermined temperature. The treated material may be a solid, a fluid, or a mixture of both. In order to agitate the treated material or the like while conveying the treated material, the reaction container 100 itself may be rotatable or a rotatable screw 120 may be provided inside the reaction container 100.

In the reactor 10, the number and configuration of the reaction container 100 are not limited. For example, the reaction container 100 may be constituted of two or more reaction containers arranged in series or in parallel. In this case, each reaction container may include a treated material supplying unit, a product sending unit, a drive apparatus, a conveying apparatus, a temperature control unit, a fluid supplying unit, etc.

While a type and a state of the treated material are not particularly limited, the treated material may be an inorganic substance such as a metal oxide or a metal sulfide that contains lithium as one of its components or an organic substance such as a hydrocarbon. The treated material may be a solid such as a powdered or granular material or a fluid such as a liquid or a gas. In addition, the treated material may be transformed into a product via an intermediate. A form and a state of the intermediate are not particularly limited. For example, an intermediate may be a product in each reaction when two or more reactions are to be performed in stages. In this case, for example, the intermediate is an anhydrous compound formed by heating a hydrated compound. Alternatively, the intermediate is a sintered material in which at least part of the treated material has been grain-grown or sintered. An intermediate is a state where at least part of the treated material is liquefied or vaporized. An intermediate may be in a form or a state other than those described above.

In addition, a type and a state of a product are not particularly limited and the product may be a solid such as a powdered or granular material or a fluid such as a liquid or a gas. The product may be a mixture that includes members other than the treated material such as a catalyst or a conveyance assisting member. The product may be a mixture of two or more compounds such as a main product and a sub-product.

In addition, while a shape and a size of the treated material and the product are not particularly limited, when the shape is bulky, a diagonal length preferably ranges from 0.01 mm to 50 mm and more preferably ranges from 0.5 mm to 20 mm. Furthermore when the shape of the treated material or the product is bulky, a ratio of diagonal lengths (aspect ratio) preferably ranges from 1 to 10 and more preferably ranges from 1.3 to 1.8.

As main components, the reactor 10 includes the reaction container 100, the temperature control area 110, the screw 120, a first fluid control area 130, and a second fluid control area 140.

For example, the reaction container 100 is a cylinder with a cylindrical shape and includes the supply port 101 that receives a supplied treated material and the sending port 102 of a product. The supply port 101 is an example of the treated material supplying unit according to the present disclosure. In addition, the reaction container 100 includes an intermediate portion between the side of the supply port (supply port 101) and the side of the sending port (sending port 102). A shape and a configuration of the reaction container 100 are not particularly limited. For example, the shape of a cross section of the reaction container 100 may be a circle or an ellipse, a polygon such as a square, or another shape. For example, the reaction container 100 may be constituted of one member or two or more members may be coupled to each other. When two or more members are coupled to each other, fastening means such as a bolt may be used, for example, at locations where the members are coupled to each other.
The reaction container 100 is formed of a material that can tolerate a temperature change that occurs when manufacturing a product in a furnace and tolerate a contact with a substance (such as a treated material) supplied to the furnace or a substance (such as a product) generated in the furnace. For example, the reaction container 100 and the screw 120 can be formed of an alloy, a ceramic, carbon, and a composite material containing two or more of these materials. The alloy is a metal member that contains at least one of the following alloying elements as a component: nickel, cobalt, chromium, molybdenum, tungsten, tantalum, titanium, iron, copper, aluminum, silicon, boron, carbon, etc. The ceramic is a ceramic member that is an oxide such as alumina or zirconia, a carbide such as silicon carbide or titanium carbide, a nitride such as silicon nitride or titanium nitride, or a boride such as chromium boride. In addition, the carbon is a carbon member such as crystalline graphite or fiber-reinforced graphite.

The reactor 10 shown in Fig. 1 lies horizontally and has the supply port 101 at an upper left end and the sending port 102 at a lower right end. The reaction container 100 shown in Fig. 1 receives the treated material R10 from the supply port 101. By rotating the screw 120 provided inside the reaction container 100, the reactor 10 causes the treated material R10 received by the reaction container 100 to pass through the intermediate portion A3 from the side of the supply port 101 of the reaction container 100 and conveys the treated material R10 to the side of the sending port 102 of the reaction container 100. The reactor 10 manufactures a product R11 from the treated material R10 by causing the treated material R10 to pass through the intermediate portion A3 of the reaction container 100. In addition, the reaction container 100 sends out the manufactured product R11 from the sending port 102.

The temperature control area 110 includes a temperature control apparatus or, in other words, a heating apparatus or a cooling apparatus and controls a temperature of the reaction container at a predetermined position in the intermediate portion A3 between the supply port 101 and the sending port 102. The temperature control area 110 and the like are an example of the temperature control unit according to the present disclosure. The temperature control area 110 shown in Fig. 1 includes a heating apparatus so as to surround a circumference of the cylindrical reaction container 100 in the intermediate portion A3 of the reaction container 100. For example, the heating apparatus includes any heater capable of temperature control such as a sheathed heater, a coil heater, or a ceramic heater. For example, the heating apparatus performs heating in a range from room temperature to around 900 degrees. In addition, the temperature control area 110 may set a different temperature for each area in the intermediate portion A3 of the reaction container 100 in a direction of an axis AX₁₂₀ of the screw 120 to be described later. For example, the temperature control area 110 can control a temperature to be imparted to the treated material R10 in the first fluid control area 130 and the second fluid control area 140 to be described later.

In addition, the temperature control area 110 may include a control apparatus for controlling the heating apparatus or the cooling apparatus. For example, the temperature control area 110 may include a thermometer for monitoring temperature at a predetermined position of the reaction container 100. In addition, for example, when the heating apparatus has a principle of heating by passing an electric current, the reaction container 100 may perform temperature control by monitoring a current value.

For example, the temperature control area 110 may be configured to perform heating or cooling by circulating water or oil. For example, the temperature control area 110 may be configured to perform cooling using a Peltier element or the like. Due to the configuration described above, the temperature control area 110 can set various temperature distributions along the direction of the axis AX₁₂₀ of the screw 120 in the reaction container 100.

As described above, the temperature control area 110 can control the temperature of the reaction container 100 (intermediate portion A3) for each mutually different area in the direction of the axis AX₁₀₀ of the reaction container 100.

Due to the screw 120 extending from the side of the supply port 101 to the side of the sending port 102 of the reaction container 100, the screw 120 rotates so as to be able to convey the treated material R10 supplied from the supply port 101 toward the sending port 102. In the screw 120 shown in Fig. 1, a spiral projection 121 is formed around a shaft that extends in a left-right direction. Due to the projection 121 rotating while coming into contact with the treated material R10, the screw 120 conveys the treated material R10 from a left side toward a right side in Fig. 1. The conveying apparatus according to the present disclosure is not limited in its shape or a conveying method as long as the conveying apparatus is capable of conveying a treated material and a product. The conveying apparatus may be a screw provided inside the reaction container 100 so as to extend from the side of the supply port 101 to the side of the sending port 102 of the reaction container 100 or the conveying apparatus may be a drum provided inside the reaction container 100 so as to extend from the side of the supply port 101 to the side of the sending port 102 of the reaction container 100. The conveying apparatus may be a belt conveyor provided inside the reaction container 100 so as to extend from the side of the supply port 101 to the side of the sending port 102 of the reaction container 100. The conveying apparatus may be an air-blowing apparatus provided inside the reaction container 100. The conveying apparatus may be a vibration generating apparatus provided inside the reaction container 100. The conveying apparatus may be an apparatus other than the above.

A size of the conveying apparatus is not particularly limited and, for example, the conveying apparatus may be shorter than an over-all length of the reaction container 100. While a material from which the conveying apparatus is formed is not particularly limited, the conveying apparatus is desirably formed of a material that can tolerate a temperature change that occurs when manufacturing a product and tolerate a contact with a substance supplied to the container in a similar manner to the reaction container 100. For example, the conveying apparatus can be formed of an alloy, a ceramic, carbon, and a composite material containing two or more of these materials.

Note that a shape of the projection 121 shown in Fig. 1 is an example and the shape of the projection 121 is not limited thereto. The projection 121 may have a different shape for each area of the reaction container 100. More specifically, for example, a pitch of the spiral of the projection 121 may change. In addition, the spiral shape of the projection 121 may have two threads instead of one. Furthermore, the projection 121 may have a portion that is not spiral-shaped. Accordingly, the reactor 10 can set, for each area, a speed of movement, a behavior of movement, and the like of an object present inside the reaction container 100. More specifically, for example, the reactor 10 conveys, agitates, mixes, kneads, or grinds the object in the reaction container 100.

The screw 120 is respectively axially supported at both ends A1 and A2 of the reaction container 100. In addition, the screw 120 shown in Fig. 1 is connected (coupled) to a drive apparatus 150 on one end side B1. The drive apparatus 150 is an example of the drive apparatus according to the present disclosure. The drive apparatus 150 includes a motor 151 provided on one end side A1 of the reaction container 100 and a speed reducer 152 provided between the motor 151 and the one end side A1 of the reaction container 100. The speed reducer 152 includes an input shaft coupled to a rotary shaft of the motor 151 and an output shaft coupled to the one end side B1 of the screw 120 and rotates the screw 120 by decelerating a rotation of the rotary shaft of the motor 151 and transmitting the decelerated rotation to the screw 120. The drive apparatus 150 may be configured so that the number of revolutions of the screw 120 is variable. In this case, the drive apparatus 150 may be a motor of which the number of revolutions is variable or a combination of a motor of which the number of revolutions is constant and a speed reducer of which a reduction ratio is variable.

The first fluid control area 130 includes a first fluid inlet 131 and a first fluid outlet 132 for passing a first fluid through the reaction container 100 in a predetermined area in the intermediate portion A3. The first fluid control area 130 is provided between the supply port 101 and the second fluid control area 140 in the reaction container 100. The first fluid inlet 131 connects to a first fluid supply pipe 133 and supplies the reaction container 100 with the first fluid that is supplied from the first fluid supply pipe 133. The first fluid supply pipe 133 includes a first valve 134 for adjusting a flow rate of the first fluid. The first fluid outlet 132 is a hole for discharging the fluid in the first fluid control area 130 to outside of the reaction container 100.

According to the configuration described above, the reactor 10 causes a reaction between the treated material R10 and the first fluid in the first fluid control area 130 and generates an intermediate. In addition, the reactor 10 discharges the fluid after the reaction to outside of the first fluid control area 130. Furthermore, the reactor 10 can accelerate the reaction by the first fluid by conveying the treated material R10 or the product while the screw 120 rotates and, further, bringing the first fluid into contact with the treated material R10 or the product. Note that a state or a form of the first fluid is not limited as long as the first fluid has fluidity. In other words, the first fluid may be a gas, a liquid, or a slurry in which a powdered or granular material or the like is dispersed in a liquid. The first fluid may be constituted of one component or two or more components.

The second fluid control area 140 includes a second fluid inlet 141 and a second fluid outlet 142 for passing a second fluid through an area that differs from the first fluid control area 130 in the intermediate portion A3. In other words, the second fluid control area 140 can have a configuration equivalent to the first fluid control area 130 in an area that differs from the first fluid control area 130.

The second fluid control area 140 is provided between the first fluid control area 130 and the sending port 102 in the reaction container 100. The second fluid inlet 141 connects to a second fluid supply pipe 143 and supplies the reaction container 100 with the second fluid that is supplied from the second fluid supply pipe 143. The second fluid supply pipe 143 includes a second valve 144 for adjusting a flow rate of the second fluid. The second fluid outlet 142 is a hole for discharging the fluid in the second fluid control area 140 to outside of the reaction container 100.

According to the configuration described above, the reactor 10 causes a reaction between the intermediate after passing through the first fluid control area 130 and the second fluid in the second fluid control area 140 and generates the product R11. In addition, the reactor 10 discharges the fluid after the reaction to outside of the second fluid control area 140. Note that a state or a form of the second fluid is not limited as long as the second fluid has fluidity. In other words, the first fluid may be a gas, a liquid, or a slurry in which a powdered or granular material or the like is dispersed in a liquid. The first fluid may be constituted of one component or two or more components.

While a configuration of the reactor 10 has been described above, the reactor 10 according to the first embodiment is not limited to the configuration described above. For example, there need only be one or more screws 120 and there may be two or more screws 120. In other words, the reactor 10 may include a plurality of screws 120 arranged parallel to one another.

A cross-sectional shape of a plane orthogonal to an axis of the screw 120 of the reaction container 100 may have a combination defined by a Reuleaux figure of constant width. In this case, the cross-sectional shape of the projection 121 of the screw 120 has a shape that combines a plurality of arcs that correspond to a Reuleaux figure of constant deputy. For example, when a cross-sectional shape inside the reaction container 100 is a circle, the cross-sectional shape of the screw 120 has a Reuleaux figure of constant width constituted of three arcs.

The reaction container 100 is not limited to lying parallel to the horizontal direction and may have a predetermined angle relative to a horizontal plane and the reaction container 100 may have a slope. While the reactor 10 includes the first fluid control area 130 and the second fluid control area 140 in the intermediate portion A3, the reactor 10 may be further configured to pass other fluids. In other words, the reactor 10 may include three or more fluid control areas. Note that the reactor 10 described above is controlled by the control apparatus to be described later.

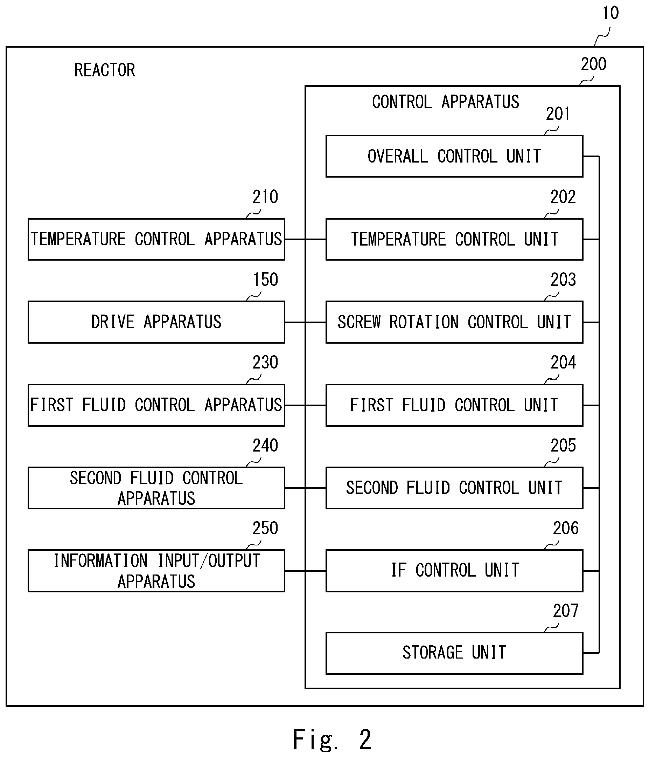

Next, functions of the reactor 10 will be described with reference to Fig. 2. Fig. 2 is a block diagram of the reactor 10 according to the first embodiment. In addition to the components shown in Fig. 1, the reactor 10 includes a control apparatus 200, a temperature control apparatus 210, a first fluid control apparatus 230, a second fluid control apparatus 240, and an information input/output unit 250.

The control apparatus 200 is a circuit board including an arithmetic unit such as a CPU (Central Processing Unit) or an MCU (Micro Controller Unit). The control apparatus 200 is communicably connected to each of the temperature control apparatus 210, the first fluid control apparatus 230, the second fluid control apparatus 240, and the information input/output unit 250 and controls each component. The control apparatus 200 realizes its functions by hardware and software mounted to the circuit board.

The control apparatus 200 includes, as main functional components, an overall control unit 201, a temperature control unit 202, a screw rotation control unit 203, a first fluid control unit 204, a second fluid control unit 205, an IF control unit 206, and a storage unit 207. The functional components included in the control apparatus 200 may be either integrated or discrete. In addition, the functional components included in the control apparatus 200 may be realized by a plurality of separate apparatuses working together.

The overall control unit 201 connects to the respective functional components of the control apparatus 200 and controls overall operations of the functions. For example, the overall control unit 201 can perform an operation such as issuing an operating instruction to the screw rotation control unit 203 according to a state of temperature supplied from the temperature control unit 202.

The temperature control unit 202 connects to the temperature control apparatus 210 and controls a temperature of the reaction container 100 in the temperature control area 110. The temperature control unit 202 includes at least one of a heating apparatus and a cooling apparatus. In addition, the temperature control unit 202 can include one or more thermometers for temperature control.

The screw rotation control unit 203 connects to the drive apparatus 150 and controls operation of the drive apparatus 150. The screw rotation control unit 203 can include a motor drive circuit for driving, for example, a motor (motor 151) included in the drive apparatus 150. In addition, the screw rotation control unit 203 can include a rotation sensor for monitoring the number of revolutions of the motor (motor 151).

The first fluid control unit 204 controls a flow of the first fluid in the first fluid control area 130. More specifically, the first fluid control unit 204 connects to the first fluid control apparatus 230 and controls operation of the first fluid control apparatus 230. The first fluid control apparatus 230 includes a first valve 134 for force-feeding the first fluid. The second fluid control unit 205 controls a flow of the second fluid in the second fluid control area 140. More specifically, the second fluid control unit 205 connects to the second fluid control apparatus 240 and controls operation of the second fluid control apparatus 240. The second fluid control apparatus 240 includes a second valve 144 for force-feeding the second fluid.

The IF control unit 206 (IF stands for Interface) is an interface that connects to the information input/output unit 250 and used to exchange information with a user via the information input/output unit 250. In other words, the IF control unit 206 receives an operation from the user via the information input/output unit 250 and appropriately supplies each component of the control apparatus 200 with information pertaining to the received operation. In addition, the IF control unit 206 controls a state of a display unit included in the information input/output unit 250.

The storage unit 207 is a storage apparatus including a nonvolatile memory such as a flash memory or an SSD (Solid State Drive). The storage unit 207 stores a program that enables the reactor 10 to realize the functions according to the present disclosure. In addition, the storage unit 207 includes a volatile memory and temporarily stores predetermined information when the control apparatus 200 operates. For example, the information input/output unit 250 includes a button, a switch, a touch panel, or the like for receiving operations from the user. Furthermore, the information input/output unit 250 includes a display apparatus or the like for presenting information to the user.

This concludes the description of the functional blocks of the reactor 10. Due to the configuration described above, the reactor 10 conveys the received treated material R10 using the screw 120, controls the temperature of the reaction container 100, and controls the atmosphere in the first fluid control area 130 and the second fluid control area 140.

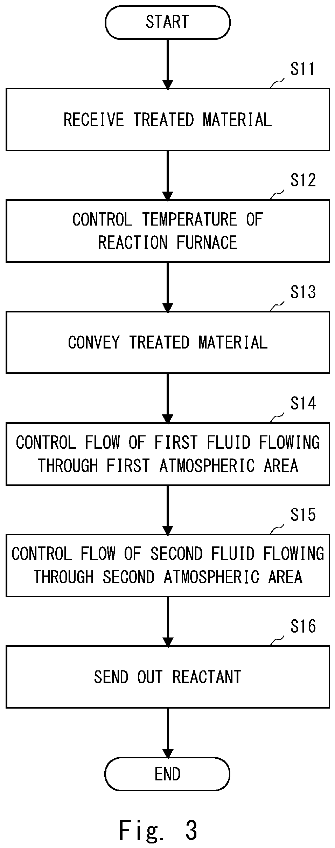

Next, a method of manufacturing a product (product manufacturing method) executed by the reactor 10 will be described with reference to Fig. 3. Fig. 3 is a flow chart of treatment executed by the reactor 10. The flowchart shown in Fig. 3 starts when, for example, supply of the treated material R10 with respect to the reactor 10 is started.

First, the reactor 10 receives a predetermined treated material R10 from the supply port 101 (step S11).

Next, the control apparatus 200 of the reactor 10 controls temperature by driving the heating apparatus or the cooling apparatus of the temperature control area 110 of the reaction container 100 via the temperature control unit 202 (step S12).

Next, the control apparatus 200 of the reactor 10 drives the drive apparatus 150 via the screw rotation control unit 203. Accordingly, the drive apparatus 150 rotates the screw 120. In addition, the screw 120 conveys the received treated material R10 toward the sending port 102 (step S13).

Next, the control apparatus 200 of the reactor 10 controls, via the first fluid control unit 204, a flow of the first fluid flowing through the first fluid control area 130 (step S14).

Next, the control apparatus 200 of the reactor 10 controls, via the second fluid control unit 205, a flow of the second fluid flowing through the second fluid control area 140 (step S15).

Next, the reactor 10 sends out, from the sending port 102, the product R11 having passed through the second fluid control area 140 (step S16).

This concludes the description of a reaction method executed by the reactor 10. The method described above is shown along a flow from the reactor 10 manufacturing the product R11 from the treated material R10 to the reactor 10 discharging the manufactured product R11. However, for example, the reactor 10 may execute the temperature control in step S12 before step S11. In addition, for example, the reactor 10 may start step S14 and step S15 at the same time.

This concludes the description of the first embodiment (reference example). While the reactor 10 described above includes two fluid control areas (first fluid control area 130 and second fluid control area 140), the reactor 10 may include one fluid control area or three or more fluid control areas. In addition, the reactor 10 may include a plurality of temperature control areas 110 along the direction of the axis AX₁₂₀ of the screw 120. The reactor 10 described above separately brings, in the intermediate portion A3, a plurality of fluids into contact with the treated material R10 received from the supply port 101. In addition, the reactor 10 performs temperature control of the reaction container 100 along the direction of the axis AX₁₂₀ of the screw 120 in the intermediate portion A3. Furthermore, the reactor 10 can subject a treated material or the like supplied to the reaction container 10 to predetermined physical stimuli while conveying the treated material or the like. In addition, in order to subject the treated material or the like to predetermined physical stimuli, the reactor 10 may be configured such that a plurality of reactors 10 are connected in series or in parallel. The reactor 10 can perform the atmosphere control, the temperature control, and the physical control described above simultaneously and with accuracy. Therefore, according to the first embodiment, a reactor or the like that manufactures a desired product in an efficient manner can be provided.

### <Second embodiment>

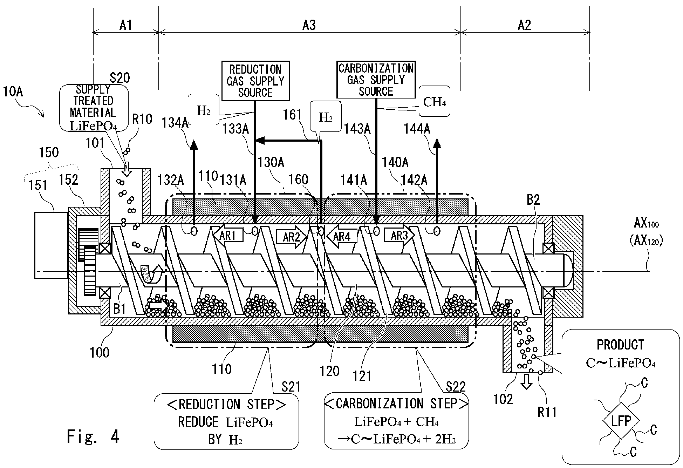

Next, as a second embodiment, a reactor 10A used to manufacture a functional base material (functional active substance) will be described with reference to Fig. 4. Fig. 4 is a side view of a reactor according to the second embodiment. Hereinafter, a description will be given with respect to the reactor 10A with a focus on differences from the reactor 10 according to the first embodiment (reference example). The same components as the reactor 10 according to the first embodiment (reference example) will be denoted by the same reference signs and a description of such components will be omitted when appropriate to do so.

As shown in Fig. 4, a first fluid control area 130A is provided so as to correspond to an upstream-side area in the intermediate portion A3 and includes a reduction gas inlet 131A and a reduction gas outlet 132A for causing a reduction gas to pass through the reaction container 100 in the upstream-side area (first fluid control area 130A). In the present disclosure, upstream and downstream are defined as follows. At a point A being an arbitrary position along a route from the supply port 101 to the sending port 102, a position close to the supply port 101 as viewed from the point A will be defined as an upstream position and a position close to the sending port 102 as viewed from the point A will be defined as a downstream position. In addition, an upstream side refers to an upstream direction as viewed from the point A and a downstream side refers to a downstream direction as viewed from the point A. The first fluid control area 130A is provided between the supply port 101 and a second fluid control area 140A in the reaction container 100. The reduction gas inlet 131A connects to a reduction gas supply pipe 133A to which a reduction gas supply source is connected and supplies the reduction gas supplied from the reduction gas supply pipe 133A to the reaction container 100. The reduction gas supply pipe 133A includes a first valve (not illustrated) for adjusting a flow rate of the reduction gas. The reduction gas outlet 132A is a hole for discharging the reduction gas of the first fluid control area 130A to outside of the reaction container 100 and is connected to a reduction gas suction pipe 134A.

The second fluid control area 140A is provided so as to correspond to a downstream-side area in the intermediate portion A3 and includes a carbonization gas inlet 141A and a carbonization gas outlet 142A for causing a carbonization gas to pass through the reaction container 100 in the downstream-side area (second fluid control area 140A). In other words, the second fluid control area 140A can have a configuration equivalent to the first fluid control area 130A in an area that differs from the first fluid control area 130A.

The second fluid control area 140A is provided between the first fluid control area 130A and the sending port 102 in the reaction container 100. The carbonization gas inlet 141A connects to a carbonization gas supply pipe 143A and supplies the carbonization gas supplied from the carbonization gas supply pipe 143A to the reaction container 100. The carbonization gas supply pipe 143A includes a second valve (not illustrated) for adjusting a flow rate of the carbonization gas. The carbonization gas outlet 142A is a hole for discharging the carbonization gas of the second fluid control area 140A to outside of the reaction container 100 and is connected to a carbonization gas suction pipe 144A.

In addition, a reduction gas outlet 160 is provided between the first fluid control area 130A and the second fluid control area 140A. The reduction gas outlet 160 is a hole for discharging the reduction gas from the first fluid control area 130A and the reduction gas from the second fluid control area 140A to outside of the reaction container 100 and is connected to a reduction gas suction pipe 161.

The reduction gas inlet 131A is an example of the reduction gas supplying unit according to the present disclosure. In addition, the carbonization gas inlet 141A is an example of the carbonization gas supplying unit according to the present disclosure.

Next, a route of reduction gas will be described.

In the reactor 10A configured as described above, a part of the reduction gas supplied from the reduction gas inlet 131A is sucked to the side of the reduction gas outlet 132A to which the reduction gas suction pipe 134A is connected and is forcibly discharged to outside of the reaction container 100 through the reduction gas outlet 132A and the reduction gas suction pipe 134A connected thereto. Accordingly, a reduction gas flow (refer to arrow AR1 in Fig. 4) from the reduction gas inlet 131A toward the reduction gas outlet 132A is generated in the first fluid control area 130A.

In addition, another part of the reduction gas supplied from the reduction gas inlet 131A is sucked to the side of the reduction gas outlet 160 to which the reduction gas suction pipe 161 is connected and is forcibly discharged to outside of the reaction container 100 through the reduction gas outlet 160 and the reduction gas suction pipe 161 connected thereto. Accordingly, a reduction gas flow (refer to arrow AR2 in Fig. 4) from the reduction gas inlet 131A toward the reduction gas outlet 160 is generated in the first fluid control area 130A.

The reduction gas flows (refer to arrows AR1 and AR2 in Fig. 4) described above are controlled to a predetermined temperature due to the temperature control area 110 heating the reaction container 100. In addition, the reduction gas flows controlled to the predetermined temperature are to come into contact with a treated material (for example, LiFePO₄) that passes through the first fluid control area 130A as will be described later.

Next, a route of carbonization gas will be described.

In the reactor 10A configured as described above, a part of the carbonization gas supplied from the carbonization gas inlet 141A is sucked to the side of the carbonization gas outlet 142A to which the carbonization gas suction pipe 144A is connected and is forcibly discharged to outside of the reaction container 100 through the carbonization gas outlet 142A and the carbonization gas suction pipe 144A connected thereto. Accordingly, a carbonization gas flow (refer to arrow AR3 in Fig. 4) from the carbonization gas inlet 141A toward the carbonization gas outlet 142A is generated in the second fluid control area 140A.

In addition, another part of the carbonization gas supplied from the carbonization gas inlet 141A is sucked to the side of the reduction gas outlet 160 to which the reduction gas suction pipe 161 is connected and is forcibly discharged to outside of the reaction container 100 through the reduction gas outlet 160 and the reduction gas suction pipe 161 connected thereto. Accordingly, a carbonization gas flow (refer to arrow AR4 in Fig. 4) from the carbonization gas inlet 141A toward the reduction gas outlet 160 is generated in the second fluid control area 140A.

The carbonization gas flows (refer to arrows AR3 and AR4 in Fig. 4) described above are controlled to a predetermined temperature due to the temperature control area 110 heating the reaction container 100. In addition, the carbonization gas flows controlled to the predetermined temperature are to come into contact with a treated material (for example, LiFePO₄ after implementing a reduction step to be described later) that passes through the second fluid control area 140A as will be described later.

In addition, a reduction gas (hydrogen) generated in the carbonization step in the second fluid control area 140A as will be described later is sucked to the side of the reduction gas outlet 160 to which the reduction gas suction pipe 161 is connected and is forcibly discharged to outside of the reaction container 100 through the reduction gas outlet 160 and the reduction gas suction pipe 161 connected thereto. Accordingly, a reduction gas flow (refer to arrow AR4 in Fig. 4) from the carbonization gas inlet 141A toward the reduction gas outlet 160 is generated in the second fluid control area 140A. The reduction gas discharged from the reduction gas outlet 160 may be supplied into the reaction container 100 once again from the reduction gas inlet 131A to be reused.

### <Method of manufacturing functional base material>

Next, a method of manufacturing a functional base material using the reactor 10A described above will be described with reference to Fig. 4. The functional base material is, for example, a base material that consists mainly of a compound (for example, lithium iron phosphate) containing at least phosphorus and a transition metal and includes a nanocarbon (for example, one or a plurality of carbon nanotubes) grown from at least a part of a surface of the base material. In the present disclosure, a type of element of the transition metal is not particularly limited as long as the transition metal is an element belonging to transition metals in the periodic table or, in other words, an element belonging to Groups 3 to 11 of the periodic table. For example, the transition metal may be iron, cobalt, or nickel. The compound may contain one type of transition metal or two or more types of transition metals. In other words, for example, the compound may contain iron and nickel in predetermined proportions.

In addition, in the present disclosure, a nanocarbon refers to a material that consists mainly of carbon of which a diameter or a short side of the material is 1000 nanometers or less. The nanocarbon may be, for example, a carbon nanotube, a carbon fiber, graphene, carbon black, fullerene, or the like.

Hereinafter, a method of manufacturing, as the functional base material, a functional base material (C~LiFePO₄) that is a base material that consists mainly of lithium iron phosphate and includes a carbon nanotube grown from a surface of the base material will be described.

"C~" in C~LiFePO₄ represents a carbon nanotube (one or a plurality) having been grown (mainly grown through a carbonization step to be described later) from a surface (mainly, a surface activated through a reduction step to be described later) of LiFePO₄ (refer to a "product" in the bottom right corner of Fig. 4). In other words, the notation of C~LiFePO₄ is used for convenience in the description of the present disclosure in order to express a state where a carbon nanotube has been grown on a surface of a base material that consists mainly of lithium iron phosphate. A shape, a form, chemical components, a chemical composition, and a crystal structure of the base material are not particularly limited as long as a nanocarbon can be generated on its surface. For example, the shape of the base material may be spherical, bulky, or plate-like. For example, the form of the base material may be a powdered or granular material. For example, the base material may have a form in which a plurality of substances are joined together. In addition, the base material may have same chemical components or a chemical composition as a compound containing at least phosphorus and a transition metal. In other words, the base material may be a compound containing at least phosphorus and a transition metal. For example, the base material may be LiFePO₄.

First, a prerequisite for implementing the method of manufacturing the functional base material (C~LiFePO₄) will be described.

Hereinafter, as a treated material, a base material that consists mainly of lithium iron phosphate (for example, lithium iron phosphate with an olivine crystal structure) will be used. Hereinafter, a description of LiFePO₄ or LFP will be used. While the shape of the base material is not particularly limited, the base material is desirably a powdered or granular material. When the shape of the base material is a powdered or granular material, an average particle diameter is desirably 500 µm or less, more desirably ranges from 1 to 200 µm, and even more desirably ranges from 1 to 50 µm. A carbonization reaction can proceed efficiently when the average particle diameter of the base material is within the range described above. For example, the average particle diameter may be a value measured by a laser diffraction/scattering particle diameter distribution analyzer (for example, Partica LA-960V2 manufactured by HORIBA, Ltd.).

In addition, hydrogen is preferably used as a reduction gas. Hereinafter, hydrogen will be described as H₂. Note that the reduction gas is not limited to hydrogen as long as the reduction gas has reducibility. For example, the reduction gas may be carbon monoxide.

In addition, methane that is a low hydrocarbon is preferably used as a carbonization gas. Hereinafter, a description of CH₄ will be used. Note that the carbonization gas is not limited to methane as long as the carbonization gas has a carbonization property. For example, the carbonization gas may be propane.

A supply flow rate (space velocity: SV value) of H₂ from the reduction gas inlet 131A to the reaction container 100 (first fluid control area 130A) is desirably supplied under conditions of 80,000 NL/kg/h or less and more desirably supplied under conditions that range from 40,000 to 80,000 NL/kg/h. Note that NL represents a volume of hydrogen to be supplied (normal cubic meter), /kg represents a unit weight of the base material that consists mainly of lithium iron phosphate (per kilogram), and /h represents a unit time of supplying hydrogen (per hour).

A preferable heating temperature of the upstream-side area (first fluid control area 130A) in the intermediate portion A3 ranges from 300 to 1000°C. In order to make reactions in the upstream-side area (first fluid control area 130A) smoother, a more preferable heating temperature of the upstream-side area (first fluid control area 130A) in the intermediate portion A3 ranges from 500°C to 700°C and is more preferably 650°C. In the present disclosure, the heating temperature is a temperature of the heating apparatus in the temperature control area and the temperature of the heating apparatus is a temperature measured by temperature measuring means such as a thermocouple attached to the heating apparatus.

On the other hand, a supply flow rate (space velocity: SV value) of low hydrocarbon (in this case, CH₄) from the carbonization gas inlet 141A to the reaction container 100 (second fluid control area 140A) is desirably supplied, in terms of methane, under conditions of 80,000 NL/kg/h or less and more desirably supplied under conditions that range from 40,000 to 80,000 NL/kg/h. Note that NL represents a volume of methane to be supplied (normal cubic meter), /kg represents a unit weight of lithium iron phosphate (per kilogram), and /h represents a unit time of supplying methane (per hour). When the SV value is less than 40,000 NL/kg/h, a sufficient carbonization reaction cannot be obtained. In addition, when the SV value exceeds 80,000 NL/kg/h, an inversion rate declines and reaction efficiency becomes poor.

A preferable heating temperature of the downstream-side area (second fluid control area 140A) in the intermediate portion A3 ranges from 300 to 1000°C. In order to make reactions in the downstream-side area (second fluid control area 140A) smoother, a more preferable heating temperature of the downstream-side area (second fluid control area 140A) in the intermediate portion A3 ranges from 600°C to 800°C and is more preferably 750°C.

The method of manufacturing C~LiFePO₄ is implemented on the premise described above.

First, a base material (in this case LiFePO₄ in a powdered or granular form) that consists mainly of a compound containing at least phosphorus and a transition metal is prepared as a treated material and the base material is supplied from the supply port 101 to the side of the supply port 101 in the reaction container 100 (step S20). LiFePO₄ supplied to the side of the supply port 101 in the reaction container 100 passes through the intermediate portion A3 from the side of the supply port 101 of the reaction container 100 and is conveyed to the side of the sending port 102 of the reaction container 100 due to the screw 120 that is rotated. A conveyance speed thereof is desirably set slow enough not to impair productivity from the perspective of sufficient reaction. For example, the conveyance speed is desirably set to 10 m/hour or lower, more desirably set to 5 m/hour or lower, and even more desirably set to 1 m/hour or lower.
LiFePO₄ may be subjected to predetermined pretreatment in advance. An example of the pretreatment is a mechanical milling treatment. Another example of the pretreatment is a jet milling treatment. Another example of the pretreatment is an electroless plating treatment. Alternatively, the pretreatment is a treatment that amorphizes at least a part of LiFePO₄ and a treatment other than those described above. The pretreatment is a treatment that causes the transition metal to adhere to at least a part of LiFePO₄ and a treatment other than those described above. The mechanical milling treatment may be a treatment in which, for example, using a planetary ball mill apparatus, LiFePO₄ and 5 mm-diameter chrome steel balls are placed in a chrome steel container and, after filling the chrome steel container with argon gas as an inert gas, LiFePO₄ and the chrome steel balls are subjected to planetary rotation at a rotational speed of 500 rpm for 24 hours. The jet milling treatment may be treatment in which, for example, using a wet jet mill equipment, a slurry of LiFePO₄ and a small amount of iron powder dispersed in isopropyl alcohol is circulated 10 times in a jet mill flow path. A base material that consists mainly of LiFePO₄ may be manufactured by subjecting LiFePO₄ to a predetermined pretreatment in this manner.

Next, a reduction step is implemented in the upstream-side area (first fluid control area 130A) in the intermediate portion A3 (step S21). In the reduction step, due to H₂ (refer to arrows AR1 and AR2 in Fig. 4) supplied from the reduction gas inlet 131A to the first fluid control area 130A coming into direct contact with the base material (in this case, a base material that consists mainly of LiFePO₄) passing through the first fluid control area 130A, at least a part of the base material passing through the first fluid control area 130A is reduced. Note that an atmosphere or the like around the base material (in this case, a base material that consists mainly of LiFePO₄) may be reduced by H₂ (refer to arrows AR1 and AR2 in Fig. 4) supplied from the reduction gas inlet 131A and the base material may be indirectly reduced through the reduced atmosphere or the like. In this manner, the "step of bringing a reduction gas into contact with a base material" according to the present disclosure not only includes a case where the base material is directly reduced by the reduction gas (in this case, H₂) but also includes a case where the base material is indirectly reduced by the reduction gas (in this case, H₂).

Subsequently, a carbonization step is implemented in the downstream-side area (second fluid control area 140A) in the intermediate portion A3 (step S22). In the carbonization step, due to CH₄ (refer to arrows AR3 and AR4 in Fig. 4) supplied from the carbonization gas inlet 141A to the second fluid control area 140A coming into contact with the base material (in this case, a base material that consists mainly of LiFePO4) after implementing the reduction step that passes through the second fluid control area 140A, a reaction expressed as LiFePO₄ + CH₄ → C~LiFePO₄ + 2H₂ occurs and C~LiFePO₄ and H₂ are generated.

C~LiFePO₄ that is a product generated through these steps is discharged to the outside of the reaction container 100 from the sending port 102 and recovered. On the other hand, H₂ generated in step S22 is discharged to the outside of the reaction container 100 from the reduction gas outlet 160 and supplied into the reaction container 100 once again from the reduction gas inlet 131A.

As described above, according to the second embodiment, a functional base material that is a base material consisting mainly of a compound (for example, lithium iron phosphate) containing at least phosphorus and a transition metal and includes a nanocarbon (for example, one or a plurality of carbon nanotubes) grown from a surface of the base material can be manufactured.

### <Third embodiment>

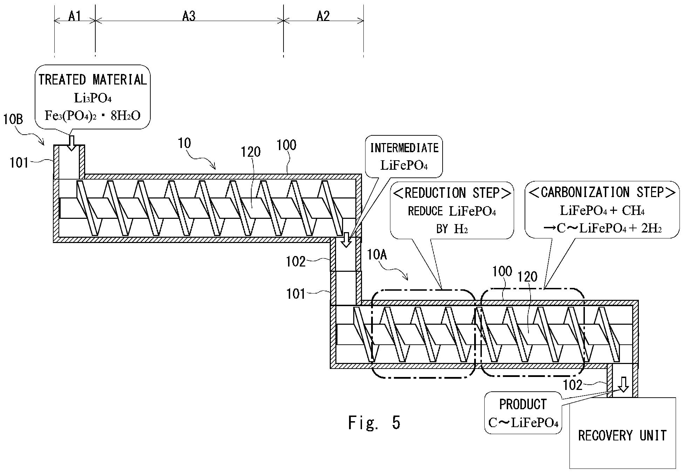

Next, as a third embodiment, a reactor 10B used to manufacture a functional base material will be described with reference to Fig. 5. Fig. 5 is a side view of a reactor according to the third embodiment. Hereinafter, a description will be given with respect to the reactor 10B with a focus on differences from the reactor 10A according to the second embodiment. The same components as the reactor 10A according to the second embodiment will be denoted by the same reference signs and a description of such components will be omitted when appropriate to do so. For the sake of description, the reactor 10A according to the second embodiment and a second reactor 10A according to the third embodiment are drawn in a simplified manner in Fig. 5.

As shown in Fig. 5, the reactor 10B is constructed by combining the reactor 10 according to the first embodiment and the reactor 10A according to the second embodiment. Hereinafter, the reactor 10 according to the first embodiment will be referred to as a first reactor 10 and the reactor 10A according to the second embodiment will be referred to as the second reactor 10A. Specifically, the sending port 102 of the first reactor 10 and the supply port 101 of the second reactor 10A are coupled to each other.

The first reactor 10 manufactures intermediate LiFePO₄.

Next, a method of manufacturing the intermediate LiFePO₄ using the reactor 10A will be described.

First, a prerequisite for implementing the method of manufacturing the intermediate LiFePO₄ will be described.

Hereinafter, Li₃PO₄ and Fe₃(PO₄)₂·8H₂O will be used as treated materials. However, the treated materials are not limited to the above as long as the treated materials are compounds from which the intermediate LiFePO₄ can be manufactured.

A heating temperature of the intermediate portion A3 of the first reactor 10 is, for example, 400°C. In addition, it is assumed that H₂ is to be supplied into the reaction container 100 of the first reactor 10.

The method of manufacturing the intermediate LiFePO₄ is implemented on the premise described above.

First, Li₃PO₄ and Fe₃(PO₄)₂·8H₂O that are treated materials are supplied from the supply port 101 of the first reactor 10 to the side of the supply port 101 inside the reaction container 100 of the first reactor 10. Li₃PO₄ and Fe₃(PO₄)₂·8H₂O supplied to the side of the supply port 101 in the reaction container 100 pass through the intermediate portion A3 from the side of the supply port 101 in the reaction container 100 of the first reactor 10 and are conveyed to the side of the sending port 102 of the reaction container 100 due to the screw 120 of the first reactor 10 that is rotated.

In doing so, in the intermediate portion A3 of the first reactor 10, due to the H₂ supplied into the reaction container 10 of the first reactor 10 coming into contact with Li₃PO₄ and Fe₃(PO₄)₂·8H₂O passing through the intermediate portion A3, a predetermined reaction occurs and intermediate LiFePO₄ is generated.

The generated intermediate LiFePO₄ is supplied from the sending port 102 of the first reactor 10 and the supply port 101 of the second reactor 10A to the side of the supply port 101 in the reaction container 100 of the second reactor 10A.

Thereafter, the method of manufacturing C~LiFePO₄ explained in the second embodiment described above is to be implemented in a second reactor 10B. Accordingly, C~LiFePO₄ that is a product is generated. C~LiFePO₄ that is a generated product is discharged to the outside of the reaction container 100 of the second reactor 10B from the sending port 102 of the second reactor 10B and recovered by a recovery unit.

As described above, according to the third embodiment, a functional base material that is a base material consisting mainly of a compound (for example, lithium iron phosphate) containing at least phosphorus and a transition metal and including a nanocarbon (for example, one or a plurality of carbon nanotubes) grown from a surface of the base material can be manufactured.

### <Fourth embodiment>

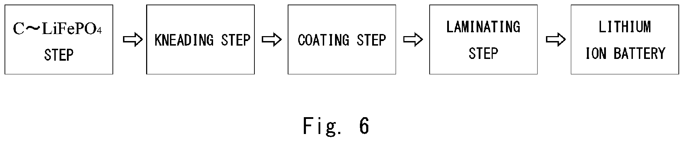

Next, a manufacturing process of a lithium ion battery (an example of the secondary battery according to the present disclosure) will be described as a fourth embodiment with reference to Fig. 6. Fig. 6 is a diagram representing a manufacturing process of a lithium ion battery (an example of the secondary battery according to the present disclosure).

As shown in Fig. 6, the manufacturing process of a lithium ion battery includes a C~LiFePO₄ manufacturing step, a kneading step, a coating step, and a laminating step, and a lithium ion battery is finally manufactured through these steps.

The C~LiFePO₄ manufacturing step is a step of manufacturing C~LiFePO₄ using the reactor 10A according to the second embodiment or the reactor 10B according to the third embodiment described above.

The kneading step is a step of adding a binder to the C~LiFePO₄ manufactured in the C~LiFePO₄ manufacturing step and kneading the C~LiFePO₄ and the binder using a twin-screw kneading extruder or the like to manufacture a slurry (dispersion liquid) containing C~LiFePO₄.

The coating step is a step of coating, using a die coater or the like, a current collector with the slurry containing C~LiFePO₄ manufactured in the kneading step. The current collector coated with the slurry containing C~LiFePO₄ is a cathode (cathode material).

The laminating step is a step of collectively laminating, using a laminate press machine or the like, the cathode (cathode material) manufactured in the coating step, an electrolyte, an anode, and the like.

A lithium ion battery is manufactured through the steps described above.

Next, an advantage of using C~LiFePO₄ will be described.

Generally, in a secondary battery, a carbon nanotube is used in addition to LiFePO₄ in order to facilitate the transfer of electrons. Usually, since a carbon nanotube is separate from the LiFePO₄, a large number of gaps exist between the carbon nanotube and the LiFePO₄. Therefore, it is difficult to further facilitate the transfer of electrons.

Conversely, C~LiFePO₄ that is manufactured by the reactor 10A according to the second embodiment or the reactor 10B according to the third embodiment described above contains a carbon nanotube (one or a plurality) having been grown (mainly grown through a carbonization step) from a surface (mainly a surface activated through a reduction step) of the C~LiFePO₄ (refer to the "product" in the bottom right corner of Fig. 4). In other words, in the C~LiFePO₄ that is manufactured by the reactor 10A according to the second embodiment or the reactor 10B according to the third embodiment described above, the carbon nanotube (one or a plurality) is adhered to a surface of LiFePO₄ and there are no gaps between the carbon nanotube and LiFePO₄. Therefore, when using the C~LiFePO₄ in a secondary battery, the transfer of electrons can be further facilitated. Accordingly, performance of the secondary battery can be further improved. For example, the secondary battery can be further miniaturized and a capacity of the secondary battery can be further increased.

Note that C~LiFePO₄ is not limited to a cathode material of a liquid-based lithium-ion battery and may also be applied to at least a part of a cathode of an all-solid-state battery (for example, a sulfide-based all-solid-state lithium-ion battery), a solid electrolyte, an intermediate layer between a cathode and an electrolyte, or the like.

Next, a modified example will be described.

While an example of using lithium iron phosphate as a treated material has been explained in the second and third embodiments described above, the treated material is not limited thereto. For example, sodium iron phosphate may be used as the treated material. In other words, the treated material need only be a base material consisting mainly of a compound (for example, a cathode active substance) containing at least phosphorus and a transition metal.

While an invention made by the present inventors has been described using specific terms based on embodiments, it is to be understood that the present invention is not limited to the embodiments already described and that various changes and modifications may be made without departing from the spirit and scope of the invention.

The present application claims priority on the basis of Japanese Patent Application No. 2022-094428 filed on June 10, 2022, the entire contents of which are incorporated herein by reference.

### Reference Signs List

- 10: REACTOR (FIRST REACTOR)
- 10A: REACTOR (SECOND REACTOR)
- 100: REACTION CONTAINER
- 101: SUPPLY PORT
- 102: SENDING PORT
- 110: TEMPERATURE CONTROL AREA
- 120: SCREW
- 121: PROJECTION
- 130: FIRST FLUID CONTROL AREA
- 130A: FIRST FLUID CONTROL AREA
- 131: FIRST FLUID INLET
- 131A: REDUCTION GAS INLET
- 132: FIRST FLUID OUTLET
- 132A: REDUCTION GAS OUTLET
- 133: FIRST FLUID SUPPLY PIPE
- 133A: REDUCTION GAS SUPPLY PIPE
- 134: FIRST VALVE
- 134A: REDUCTION GAS SUCTION PIPE
- 140: SECOND FLUID CONTROL AREA
- 140A: SECOND FLUID CONTROL AREA
- 141: SECOND FLUID INLET
- 141A: CARBONIZATION GAS INLET
- 142: SECOND FLUID OUTLET
- 142A: CARBONIZATION GAS OUTLET
- 143: SECOND FLUID SUPPLY PIPE
- 143A: CARBONIZATION GAS SUPPLY PIPE
- 144: SECOND VALVE
- 144A: CARBONIZATION GAS SUCTION PIPE
- 150: DRIVE APPARATUS
- 151: MOTOR
- 152: SPEED REDUCER
- 160: REDUCTION GAS OUTLET
- 161: REDUCTION GAS SUCTION PIPE
- 200: CONTROL APPARATUS
- 201: OVERALL CONTROL UNIT
- 202: TEMPERATURE CONTROL UNIT
- 203: SCREW ROTATION CONTROL UNIT
- 204: FIRST FLUID CONTROL UNIT
- 205: SECOND FLUID CONTROL UNIT
- 206: IF CONTROL UNIT
- 207: STORAGE UNIT
- 210: TEMPERATURE CONTROL APPARATUS
- 230: FIRST FLUID CONTROL APPARATUS
- 240: SECOND FLUID CONTROL APPARATUS
- 250: INFORMATION INPUT/OUTPUT UNIT
- R10: TREATED MATERIAL
- R11: PRODUCT

## Claims

1. A functional base material manufacturing method, comprising the steps of:
bringing a reduction gas into contact with a base material that consists mainly of a compound containing at least phosphorus and a transition metal; and
bringing a carbonization gas into contact with the base material having been in contact with the reduction gas.

2. The functional base material manufacturing method according to claim 1, wherein the compound is lithium iron phosphate.

3. The functional base material manufacturing method according to claim 2, wherein the base material is a powdered or granular material with an average particle diameter of 500 µm or less.

4. The functional base material manufacturing method according to any one of claims 1 to 3, wherein
the reduction gas is hydrogen, and
the carbonization gas is low hydrocarbon.

5. The functional base material manufacturing method according to any one of claims 1 to 3, wherein
a supply flow rate of the reduction gas ranges from 40,000 to 80,000 NL/kg/h and a heating temperature of the reduction gas ranges from 300 to 1000°C, and
a supply flow rate of the carbonization gas ranges from 40,000 to 80,000 NL/kg/h and a heating temperature of the carbonization gas ranges from 300 to 1000°C.

6. The functional base material manufacturing method according to any one of claims 1 to 3, wherein
the step of bringing a reduction gas into contact with a base material is implemented on an upstream side of a reaction container included in a reactor,
the step of bringing a carbonization gas into contact with the base material is implemented on a downstream side of the reaction container, and
the reactor includes:
the reaction container including an intermediate portion between a supplying unit and a sending unit;
a temperature control unit that controls a temperature of an upstream-side area in the intermediate portion and a temperature of a downstream-side area in the intermediate portion for each area;
the supplying unit that supplies the base material to the reaction container;
a conveying apparatus that conveys the base material supplied to the reaction container from a side of the supplying unit of the reaction container and through the intermediate portion to a side of the sending unit of the reaction container;
a reduction gas supplying unit that supplies the reduction gas to come into contact with the compound passing through the upstream-side area of the intermediate portion to the upstream-side area of the intermediate portion; and
a carbonization gas supplying unit that supplies the carbonization gas to come into contact with the compound passing through the downstream-side area of the intermediate portion to the downstream-side area of the intermediate portion.

7. A functional base material that is a base material consisting mainly of a compound containing at least phosphorus and a transition metal and includes a nanocarbon grown from at least a part of a surface of the base material.

8. The functional base material according to claim 7, wherein
the compound is lithium iron phosphate, and
the nanocarbon is a carbon nanotube.

9. The functional base material according to claim 7, wherein the base material is a powdered or granular material with an average particle diameter of 500 µm or less.

10. A secondary battery including the functional base material according to any one of claims 7 to 9.

11. A cathode material including the functional base material according to any one of claims 7 to 9.

12. A functional base material manufacturing apparatus, comprising:
a cylindrical reaction container including an intermediate portion between a supply port and a sending port;
a temperature control unit that controls a temperature of an upstream-side area in the intermediate portion and a temperature of a downstream-side area in the intermediate portion for each area;
a treated material supplying unit that supplies a base material consisting mainly of a compound containing at least phosphorus and iron to the reaction container;
a conveying apparatus that conveys the compound supplied to the reaction container from a side of the supply port of the reaction container and through the intermediate portion to a side of the sending port of the reaction container;
a reduction gas supplying unit that supplies a reduction gas to come into contact with the compound passing through the upstream-side area of the intermediate portion to the upstream-side area of the intermediate portion; and
a carbonization gas supplying unit that supplies a carbonization gas to come into contact with the compound passing through the downstream-side area of the intermediate portion to the downstream-side area of the intermediate portion.

13. The functional base material manufacturing apparatus according to claim 12, wherein the conveying apparatus is a screw that is arranged inside the reaction container and that rotates so as to convey the base material supplied to the reaction container from a side of the supply port of the reaction container and through the intermediate portion to a side of the sending port of the reaction container.
